# EUROPEAN PATENT SPECIFICATION

(11) **EP 2 852 639 B1**
(45) Date of publication and mention of the grant of the patent: **07.10.2015**
(21) Application number: 13723108.0
(22) Date of filing: 14.05.2013
(51) Int. Cl.: C09B 69/10, C11D 3/37

(54) **ARYLATED POLYETHYLENEIMINE DYE**
ARYLIERTER POLYETHYLENIMIN-FARBSTOFF
COLORANT DE TYPE POLYÉTHYLÈNE-IMINE ARYLÉ

(30) Priority: 16.05.2012 EP 12168346
(43) Date of publication of application: 01.04.2015
(73) Proprietor: Unilever PLC, London, Greater London EC4Y 0DY (GB); Unilever N.V., 3013 AL Rotterdam (NL)
(72) Inventor: BATCHELOR, Stephen, Norman, Wirral Merseyside CH63 3JW (GB); BIRD, Jayne, Michelle, Wirral Merseyside CH63 3JW (GB); DEVINE, Karen, Maria, Wirral Merseyside CH63 3JW (GB)
(74) Representative: Avila, David Victor
(86) International application number: PCT/EP2013/059942
(87) International publication number: WO 2013/171212

(56) References cited:
- WO-A1-2011/047987
- US-A- 5 565 145

## Description

### Field of Invention

The invention concerns arylated polyethyleneimine dyes for use in home and personal care.

### Background of the Invention

WO2011/047987 discloses a reactive dye covalently bound to polyethyleneimine polymers, non-arylated alkoxylated polyethylenelmine dyes, for used in laundry detergent formulations to whiten fabric.

US5565145 discloses alkoxylated ethylene imine polymers without dyes present; the alkoxylated ethylene imine polymers are disclosed as soil dispersing agents.

There is a need to improve the whitening performance of reactive dyes covalently bound to polyethyleneimine in laundry detergents.

### Summary of the invention

We have found that arylated alkoxylated polyethylenelmine dyes give enhanced performance in whitening textiles during laundry processes.

In one aspect the present invention provides an arylated alkoxylated polyethylenelmine dye, wherein the arylated alkoxylated polyethylenelmine dye is a polyethyleneimine having covalently bound to the nitrogen groups of the polyethyleneimine:
(i) a blue or violet reactive dye;
(ii) an alkylene oxide; and,
(iii) an alkylene chain, preferably linear C1-C6, most preferably C2, having covalently bound thereto a phenyl group or naphthyl group, preferably phenyl.

In another aspect the present invention provides a laundry treatment composition comprising:
(i) from 2 to 70 wt% of a surfactant; and,
(ii) from 0.01 to 20.0 wt%, preferably from 0.1 to 4 wt%, of the arylated alkoxylated polyethylenelmine dye.

In a further aspect the present invention provides a domestic method of treating a textile, the method comprising the steps of:
(i) treating a textile with an aqueous solution of the arylated alkoxylated polyethylenelmine dye, the aqueous solution comprising from 100 ppb to 5000 ppm, preferably from 10 to 100ppm, of the arylated alkoxylated polyethylenelmine dye; and, from 0.0 g/L to 3 g/L, preferably from 0.2 to 3 g/L, most preferably from 0.3 to 0.6g/L, of a surfactant; and,
(ii) optionally rinsing and drying the textile.

### Detailed Description

Arylated alkoxylated polyethylenelmine dyes give enhanced performance in whitening textiles during laundry processes. The arylated alkoxylated polyethylenelmine dyes are preferably used with non-arylated alkoxylated polyethylenelmine dyes.

The mixture may be provided by arylating PEI with less than one mole equivalent of an arylating agent followed by teathering of reactive dye and alkoxylation. Conversely, arylated alkoxylated polyethylenelmine dye may be mixed with non-arylated alkoxylated polyethylenelmine dye.

Non-arylated alkoxylated polyethylenelmine dyes are described in detail in WO2011/047987.

Preferably the mol ratio of non-arylated alkoxylated polyethylenelmine dyes to arylated alkoxylated polyethylenelmine dyes is from 10:1 to 1:100, most preferably from 5:1 to 1:50.

Preferably the PEI has from 6 to 100 Nitrogen atoms, more preferably 12 to 40.

Preferably the only N's in the arylated alkoxylated polyethylenelmine are in the central polyethyleneimine (PEI).

Preferably the PEI before reaction with the alkoxy or aryl moieties contains at least 3 primary or secondary amines. Preferably only one or two of the nitrogens of the polyethyleneimine are alkoxylated.

Arylation is the covalent bonding of an organic group containing an aryl group to the polyethyleneimine. The preferred aryl groups are napthyl and phenyl, most preferably phenyl.

The aryl groups can be substituted by further organic groups that are preferably uncharged substituents. These aryl groups do not form part of the dye chromophore. Examples of suitable further organic groups are methyl, ethyl, methoxy, nitro, chloro, fluro, etc.

Preferably there are 1 or 2 aryl mol equivalents of aryl groups per 1 mol of PEI.

Arylation of the PEI may be facilitated by aryl halides, for example benzyl chloride or 1-chloromethyl naphthalene.

Preferably the arylation is the reaction of an aryl compounding bearing an epoxide side group with polyethyleneimine (PEI). The so-formed arylated PEI is then ethoxylated. Preferred epoxide compounds are selected from

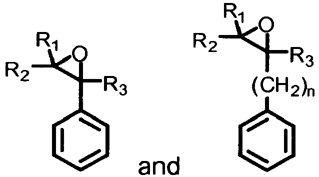

Where R₁ R₂ and R₃ are independently selected from H, C1-C6 branched, cyclic or linear alkyl. Preferably R₁ is H, more preferably R₁ and R₂ are H, most preferably and R₁ R₂ and R₃ are H. n is from 1 to 4. The phenyl ring may be further substituted by organic groups, preferably uncharged organic groups. Preferably CH3, C2-C6 branched, cyclic or linear alkyl.

The epoxide may be prepared by epoxidation of the corresponding alkene using a peracid. Suitable alkenes include styrene, alpha-methyl styrene, trans-beta-methyl-styrene, allylbenzene, 4-phenyl-1-butene, 3-methyl-1-phenyl-1-propene, 2,3-dibenzyl-1,3-butadiene, 1,2-dihydronaphthalene, alpha-2-dimethyl styrene, 4-methyl styrene, divinyl benzene, 4-tert-butyl benzene, 2,4-dimethyl styrene. Most preferably the alkene used is styrene or alpha-methyl styrene.

A reaction scheme is exemplified below:

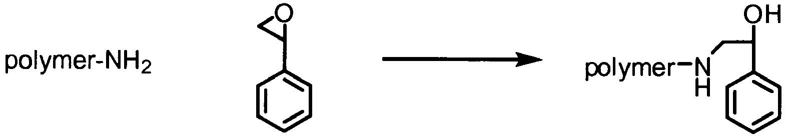

Alkoxylated PEI are PEI's, where a single or number of amine functions are reacted with alkoxy moieties to form an alkoxy side chain. The alkoxy side chains may be formed by reaction of the PEI with an alkylene oxide, preferably ethylene oxide, propylene oxide or mixtures thereof.

Preferably the alkoxy side chain is added by the reaction of the PEI, with a preformed alkoxy chain, which contains a reactive group that reacts with primary or secondary amines of the PEI to form a covalent bond. Examples of reactive groups are selected from epoxides, alkenes, a sulfooxyethylsulfonyl reactive group (-SO₂CH₂CH₂OSO₃Na), heterocyclic reactive groups and leaving groups such as tosylate. The heterocyclic reactive groups are preferably nitrogen contains aromatic rings bound to a halogen or an ammonium group, which react with NH₂ or NH groups to form a covalent bond. The halogen is preferred. More preferred heterocylic reactive groups are dichlorotriazinyl, difluorochloropyrimidine, monofluorotrazinyl, monofluorochlorotrazinyl, dichloroquinoxaline, difluorotriazine, monochlorotriazinyl, and trichloropyrimidine. Preferably the alkoxy chain contains only 1 reactive group, to avoid cross-linking reactions, and the other chain end is alkyl capped.

The alkoxy chains are preferably selected from ethoxy or propoxy groups. Most preferably ethoxy. Preferably the alkoxy chain contain 5 to 50 alkoxyl repeat unit, more preferably 10 to 20.

The arylated alkoxylated PEI are PEI's, where a single or a number of amine functions of the PEI, are reacted with one or more aryl containing moieties to form a side chain containing an aryl group on the polymer and a single or number of amine functions are reacted with to form an alkoxy side chain.

The polymer is dyed by mixing with reactive dyes under alkaline conditions, preferably pH=10 to 11. Heating to, for example 300- 350K, accelerates the reaction.

Following dyeing the mixture should be neutralised to pH 7.

The PEI may be arylated, alkoxylated then reactively dyed. The PEI may be alkoxylated then arylated then reactively dyed. Preferably the PEI is arylated then reactively dyed then alkoxylated.

The polymers give enhance anti-re-deposition benefit in detergent formulation where the fraction of (wt% non-ionic)/(wt% anionic surfactant) is greater than 0.6, preferably greater than 0.95.

### Reactive Dyes

Reactive dyes are described in Industrial Dyes (K.Hunger ed, Wiley VCH 2003). Many Reactive dyes are listed in the colour index (Society of Dyers and Colourists and American Association of Textile Chemists and Colorists).

Reactive dyes consist of a dye chromophore covalently bound to a reactive group. Reactive groups react with primary and secondary amines to form a covalent bound, preferably by a substitution or addition reaction.

Blue and violet dye chromophores are preferably selected from anthraquinone, bis-azo, triphenodioxazine, and phthalocyanine, more preferably anthraquinone and bis-azo, most preferably bis-azo.

Red and violet reactive dyes may be mixed with the blue and violet reactive dyes to provide the correct hue. Reactive red dye chromophores are preferably selected from mono and bis-azo dyes.

A preferred blue bis-azo dye is of the form:

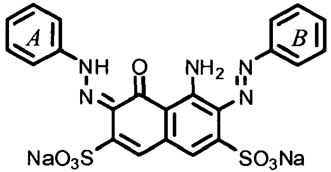

Where one or both of the A and B rings are substituted by a reactive group. Surprisingly blue bis-azo dyes provide a delightful violet hue when bound to PEI polymers.

The A and B rings may be further substituted by sulphonate groups (SO₃Na).

The A and B rings may be further substituted with suitable uncharged organic groups, preferably with a molecular weight lower than 200. Preferred groups are - CH₃, -C₂H₅, and -OCH₃.

Preferred blue bis-azo dye dyes are Reactive Black 5, Reactive Blue 171, Reactive Blue 154, Reactive Blue 184, Reactive Blue 207, Reactive Blue 214, Reactive Blue 217, Reactive Blue 203, Reactive Blue 225, Levafix Navy CA, Procion Navy H-EXL, Reactive Blue 176, Reactive Blue 109, Reactive Blue 230, Reactive Blue 225, Reactive Blue 222, Reactive Blue 250 and Reactive Blue 281.

A preferred blue anthraquinone dye is of the form: 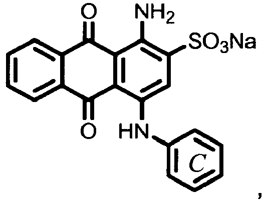 where the C ring is substituted by a reactive group. The dye may be further substituted with sulphonate groups (SO₃Na) and suitable uncharged organic groups, preferably with a molecular weight lower than 200. Preferred uncharged organic groups are-CH₃, -C₂H₅, and -OCH₃.

A preferred triphenodioxazine dye is of the form:

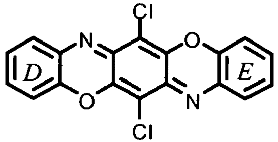

Where the D and E rings are substituted by a reactive groups. Preferably the D and E rings are further substituted by sulphonate groups (SO₃Na).

A preferred red azo dye is of the form:

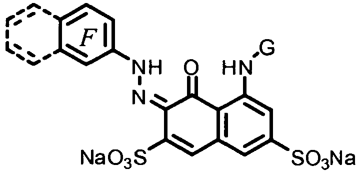

Where the F ring is optionally extended to form a naphthyl group are optionally substituted groups selected from sulphonate groups (SO₃Na) and a reactive group.

G is selected from a reactive group, H, or alky group. A reactive group must be present on the dye.

With the exception of copper phthalocyanine dyes, metal complex dyes are not preferred.

Reactive groups are preferably selected from heterocyclic reactive groups and, a sulfooxyethylsulfonyl reactive group (-SO₂CH₂CH₂OSO₃Na).

The heterocyclic reactive groups are preferably nitrogen containing aromatic rings bound to a halogen or an ammonium group, which react with NH₂ or NH groups of the polymers to form a covalent bond. The halogen is preferred. More preferred heterocylic reactive groups are dichlorotriazinyl, difluorochloropyrimidine, monofluorotrazinyl, monofluorochlorotrazinyl, dichloroquinoxaline, difluorotriazine, monochlorotriazinyl, and trichloropyrimidine.

The reactive group may be linked to the dye chromophore via an alkyl spacer for example: dye-NH-CH₂CH₂-reactive group.

Especially preferred heterocylic reactive groups are: 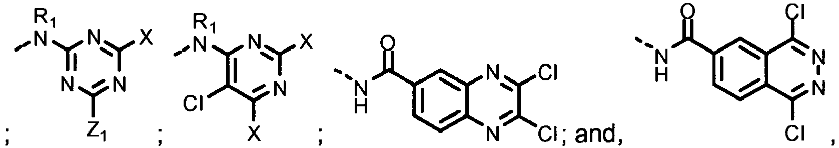
wherein R₁ is selected from H or alkyl, preferably H.
X is selected from F or Cl.
When X = Cl, Z₁ is selected from -Cl, -NR₂R₃, -OR₂, -SO₃Na
When X = F, Z₁ is selected from -NR₂R₃
R₂ and R₃ are independently selected from H, alkyl and aryl groups. Aryl groups are preferably phenyl and are preferably substituted by -SO₃Na or - SO₂CH₂CH₂OSO₃Na. Alkyl groups are preferably methyl or ethyl.

The phenyl groups may be further substituted with suitable uncharged organic groups, preferably with a molecular weight lower than 200. Preferred groups include -CH₃, -C₂H₅, and -OCH₃.

The alkyl groups may be further substituted with suitable uncharged organic groups, preferably with a molecular weight lower than 200. Preferred groups include -CH₃, -C₂H₅, -OH, -OCH₃, -OC₂H₄OH.

Most preferred heterocylic reactive groups are selected from:

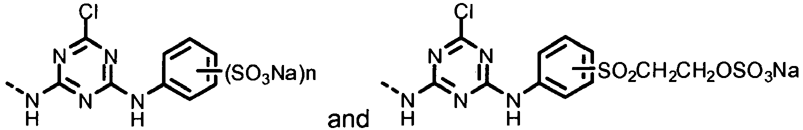

Where n = 1 or 2, preferably 1.

Preferably the reactive dye contains more than one reactive group, preferably two or three.

A hydrolysed reactive dyes is one in which the reactive groups has reacted with the hydroxide anion, HO⁻, rather than the polymer. Preferably the composition contains less than 100ppm of hydrolysed reactive dye per 10000ppm dye-polymer, more preferably less than 20ppm. Most preferably hydrolysed reactive dyes are not present in the composition. Such dyes may be removed by dialysis or careful control of the reaction conditions.

Preferably the dye-polymers of the invention as received from the synthetic procedure have less than 1000ppm of material with weight average molecular weight lower than 1500, more preferably less than 5ppm, when 10 000ppm of dye polymer is present in aqueous solution. Low molecular weight material may be removed by dialysis or avoided by careful control of the reaction conditions.

Examples of reactive dyes are reactive blue 2, reactive blue 4, reactive blue 5, reactive blue 7, reactive blue 15, reactive blue 19, reactive blue 27, reactive blue 29, reactive blue 49, reactive blue 50, reactive blue 74, reactive blue 94, reactive blue 171, reactive blue 246, reactive blue 247, reactive blue 247, reactive blue 166, reactive blue 109, reactive blue 187, reactive blue 213, reactive blue 225, reactive blue 238, reactive blue 256.

Further structures are exemplified below: 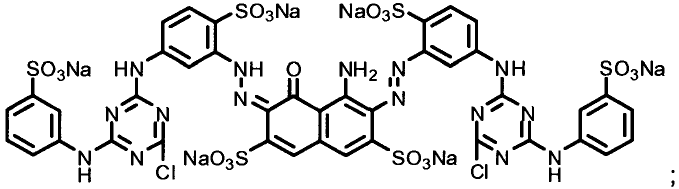 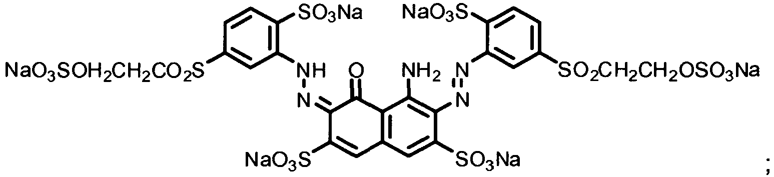 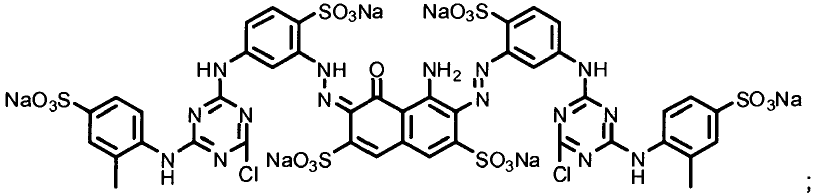 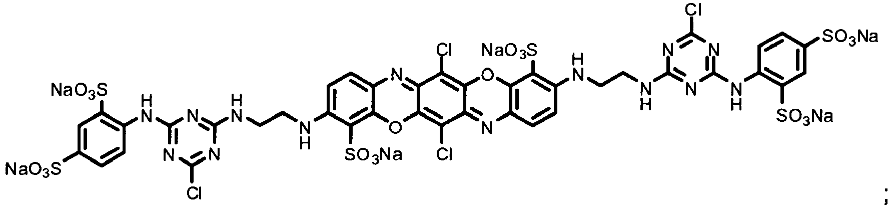 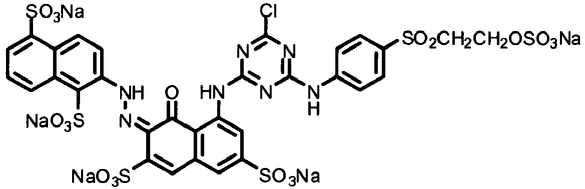 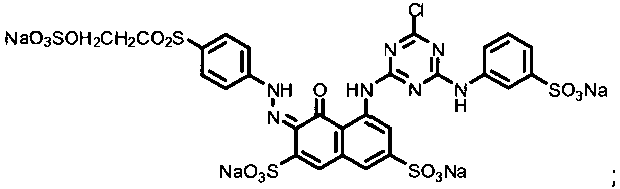 and

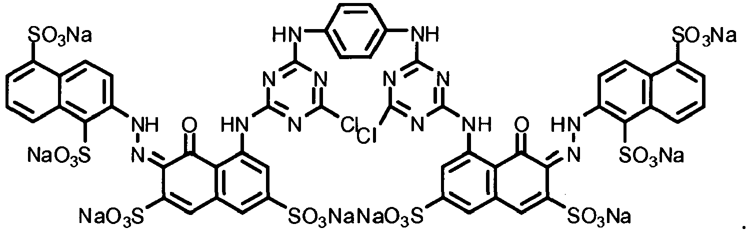

### Examples

### The following polymers were synthesised.

### Polymer type A: (reference)--an ethoxylated PEI covalently bound to a dye

A 1300 molecular weight PEI core was react with tosylated monomethyl polyethylene glycol to give an ethoxylated PEI, The mol ratio of PEI: tosylated monomethyl polyethylene glycol was 1:1. The polyethylene glycol had a chain with an average of 13 ethoxylate groups. The polymer was then reacted with 5wt% on PEI of reactive dye. The reactive dyes used were Reactive Blue 171 and Reactive Blue 49.

### Polymer type B--an ARYLATED ethoxylated PEI covalently bound to a dye

A 1300 molecular weight PEI core was react styrene oxide in the mol ratio 10:1. The procedure of Polymer A was then repeated, to give reactively dyed arylated, ethoxylated PEI's.

The following liquid compositions were made:

| | Wt% | | |
|---|---|---|---|
| | Blank formulation | Polymer A formulation | Polymer B formulation |
| LAS | 4.9 | 4.9 | 4.9 |
| NI(7EO) | 7.3 | 7.3 | 7.3 |
| SLES(3EO) | 2.4 | 2.4 | 2.4 |
| Alkyl Betaine | 0.9 | 0.9 | 0.9 |
| 1,2-propanediol | 15 | 15 | 15 |
| Triethanolamine | 2 | 2 | 2 |
| Perfume | 1.4 | 1.4 | 1.4 |
| Polymer A | 0 | 3.5 | 0 |
| Polymer B | 0 | 0 | 3.5 |
| Water | remainder | remainder | remainder |

| | | | |
|---|---|---|---|
| LAS is sodium C₁₁ to C₁₅ alkyl benzene sulphonate. NI(7EO) is R-(OCH₂CH₂)ₙOH, where R is an alkyl chain of C12 to C15, and n is 7. SLES(3EO) is sodium lauryl ether sulfate with 3 ethoxy groups. The Alkyl Betaine used was Empigen BB (ex Huntsman). All values are wt%. | | | |

The compositions were used to wash a mixture of white fabrics: woven cotton, micro-fibre polyester, and knitted nylon-elastane at a Liquor to cloth ratio of 10:1 in a shaker bottle. The fabrics were of equal area. 26° French hard water was used and each wash lasted 30 minutes and was followed by a running rinse. The compositions were all used at 2.3g/L.

The white clothes were removed, dried and the colour measured using a relflectometer and expressed as the CIE L*a*b* values. The bluing (whiteness) of the dye-polymer was expressed as the • b value • b = b(control) - b (dye polymer)

| | | • b | |
|---|---|---|---|
| | fabric | Polymer A (reference) | Polymer B |
| Reactive Blue 49 | Cotton | 2.3 | 4.9 |
| | Polyester | 2.0 | 3.6 |
| Reactive Blue 171 | Cotton | 3.5 | 5.4 |
| | Polyester | 2.3 | 3.0 |

| | | | |
|---|---|---|---|
| Polymer B gives more bluing (whiteness) than Polymer A as shown by the higher • b values. | | | |

## Claims

1. An arylated alkoxylated polyethylenelmine dye, wherein the arylated alkoxylated polyethylenelmine dye is a polyethyleneimine having covalently bound to the nitrogen groups of the polyethyleneimine:
(i) a blue or violet reactive dye;
(ii) an alkylene oxide; and,
(iii) an alkylene chain having covalently bound thereto a phenyl or naphthyl group.

2. An arylated alkoxylated polyethylenelmine dye according to claim 1, wherein the polyethyleneimine is one having from 6 to 100 nitrogen atoms.

3. An arylated alkoxylated polyethylenelmine dye according to claim 2, wherein the polyethyleneimine is one having from preferably 12 to 40 nitrogen atoms.

4. An arylated alkoxylated polyethylenelmine dye according to any one of claims 1 to 3, wherein the alkylene chain having a pendent phenyl group is formed by the addition of an amine of polyethyleneimine to styrene oxide or alpha-methyl styrene oxide.

5. An arylated alkoxylated polyethylenelmine dye according to any one of claims 1 to 4, wherein the blue and violet dye chromophore of the reactive dye is selected from: anthraquinone; bis-azo; triphenodioxazine; and, phthalocyanine.

6. An arylated alkoxylated polyethylenelmine dye according to claim 5, wherein the blue and violet dye chromophore of the reactive dye is bis-azo.

7. An arylated alkoxylated polyethylenelmine dye according to any one of the preceding claims, wherein the reactive dye has reactive group selected from the group comprising: dichlorotriazinyl; difluorochloropyrimidine; monofluorotrazinyl; dichloroquinoxaline; vinylsulfone; difluorotriazine; monochlorotriazinyl; bromoacrlyamide; and, trichloropyrimidine.

8. An arylated alkoxylated polyethylenelmine dye according to claim 6, wherein the blue or violet reactive dye is selected from: Reactive Black 5; Reactive Blue 171; Reactive Blue 154; Reactive Blue 184; Reactive Blue 207; Reactive Blue 214; Reactive Blue 203, Reactive Blue 217; Reactive Blue 225; Levafix Navy CA; Procion Navy H-EXL; Reactive Blue 176; Reactive Blue 109; Reactive Blue 230; Reactive Blue 225; Reactive Blue 222; Reactive Blue 250; Reactive Blue 281; and,

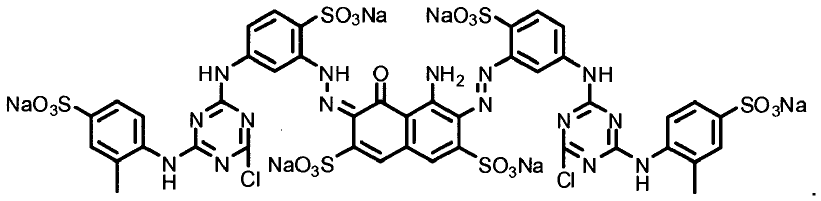

9. An arylated alkoxylated polyethylenelmine dye according to any one of the preceding claims, wherein the alkylene oxide is a polyalkylene oxide.

10. An arylated alkoxylated polyethylenelmine dye according to claim 9, wherein the alkoxy chain of the alkylene oxide is selected from: ethoxy; and, propoxy groups.

11. An arylated alkoxylated polyethylenelmine dye according to claim 10, wherein the alkoxy chain contains from 5 to 50 alkoxyl repeat units

12. An arylated alkoxylated polyethylenelmine dye according to claim 11, wherein the alkoxy chain contains 10 to 20 repeat units.

13. An arylated alkoxylated polyethylenelmine dye according to any one of the preceding claims, wherein only one or two of the nitrogens of the polyethyleneimine are alkoxylated.

14. An arylated alkoxylated polyethylenelmine dye according to any one of the preceding claims, wherein only one reactive dye is covalently bound to the polyethyleneimine.

15. A laundry treatment composition comprising:
(i) from 2 to 70 wt% of a surfactant; and,
(ii) from 0.01 to 20.0 wt% of the arylated alkoxylated polyethylenelmine dye as defined in any one of claims 1 to 14.

16. A laundry treatment composition according to claim 15, comprising:
(iii) a non-arylated alkoxylated polyethylenelmine dye, wherein the mol ratio of non-arylated alkoxylated polyethylenelmine dye to arylated alkoxylated polyethylenelmine dye is in the range from 10:1 to 1:100.

17. A domestic method of treating a textile, the method comprising the steps of:
(i) treating a textile with an aqueous solution of the arylated alkoxylated polyethylenelmine dye as defined in any one of claims 1 to 14, the aqueous solution comprising from 100 ppb to 5000 ppm, of the arylated alkoxylated polyethylenelmine dye; and, from 0.0 g/L to 3 g/L of a surfactant; and,
(ii) optionally rinsing and drying the textile.

18. A domestic method according to claim 17, comprising: (iii) a non-arylated alkoxylated polyethylenelmine dye, wherein the mol ratio of non-arylated alkoxylated polyethylenelmine dye to arylated alkoxylated polyethylenelmine dye is in the range from 10:1 to 1:100.

19. A domestic method of treating a textile according to claim 17 or 18, wherein the aqueous solution comprises from 0.2 to 3 g/L of a surfactant.

20. A domestic method of treating a textile according to claim 18 or 19, wherein the aqueous solution comprises a fluorescer in the range from 0.0001 g/l to 0.1 g/l

## Patentansprüche

1. Arylierter, alkoxylierter Polyethylenimin-Farbstoff, wobei es sich beim arylierten, alkoxylierten Polyethylenimin-Farbstoff um ein Polyethylenimin handelt, bei dem Folgendes kovalent an die Stickstoffgruppen des Polyethylenimins gebunden ist:
(i) ein blauer oder violetter Reaktivfarbstoff;
(ii) ein Alkylenoxid; und
(iii) eine Alkylenkette, an die kovalent eine Phenyl- oder Naphthylgruppe gebunden ist.

2. Arylierter, alkoxylierter Polyethylenimin-Farbstoff nach Anspruch 1, wobei das Polyethylenimin 6 bis 100 Stickstoffatome aufweist.

3. Arylierter, alkoxylierter Polyethylenimin-Farbstoff nach Anspruch 2, wobei das Polyethylenimin vorzugsweise 12 bis 40 Stickstoffatome aufweist.

4. Arylierter, alkoxylierter Polyethylenimin-Farbstoff nach einem der Ansprüche 1 bis 3, wobei die Alkylenkette mit einer seitenständigen Phenylgruppe durch Addition eines Amins des Polyethylenimins an Styroloxid oder alpha-Methylstyroloxid gebildet worden ist.

5. Arylierter, alkoxylierter Polyethylenimin-Farbstoff nach einem der Ansprüche 1 bis 4, wobei das blaue und violette Farbstoffchromophor des reaktiven Farbstoffes aus Antrachinon, Bisazo, Triphenodioxazin und Phthalocyanin ausgewählt ist.

6. Arylierter, alkoxylierter Polyethylenimin-Farbstoff nach Anspruch 5, wobei es sich beim blauen und violetten Farbstoffchromophor des reaktiven Farbstoffes um Bisazo handelt.

7. Arylierter, alkoxylierter Polyethylenimin-Farbstoff nach einem der vorstehenden Ansprüche, wobei der Reaktivfarbstoff eine reaktive Gruppe aufweist die ausgewählt ist aus der Gruppe, die Folgendes umfasst: Dichlortriazinyl; Difluorchlorpyrimidin; Monofluortriazinyl; Dichlorchinoxalin; Vinylsulfon; Difluortriazin; Monochlortriazinyl; Bromacrylamid; und Trichlorpyrimidin.

8. Arylierter, alkoxylierter Polyethylenimin-Farbstoff nach Anspruch 6, wobei der blaue oder violette Reaktivfarbstoff ausgewählt ist aus Reactive Black 5; Reactive Blue 171 ; Reactive Blue 154; Reactive Blue 184; Reactive Blue 207; Reactive Blue 214; Reactive Blue 203, Reactive Blue 217; Reactive Blue 225; Levafix Navy CA; Procion Navy H-EXL; Reactive Blue 176; Reactive Blue 109; Reactive Blue 230; Reactive Blue 225; Reactive Blue 222; Reactive Blue 250; Reactive Blue 281 ; und

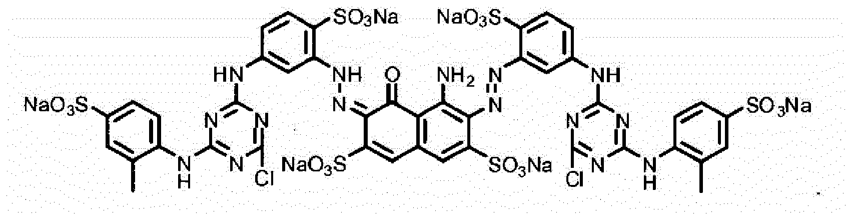

9. Arylierter, alkoxylierter Polyethylenimin-Farbstoff nach einem der vorstehenden Ansprüche, wobei es sich beim Alkylenoxid um ein Polyalkylenoxid handelt.

10. Arylierter, alkoxylierter Polyethylenimin-Farbstoff nach Anspruch 9, wobei die Alkoxykette des Alkylenoxids ausgewählt ist aus Ethoxy- und Propoxygruppen.

11. Arylierter, alkoxylierter Polyethylenimin-Farbstoff nach Anspruch 10, wobei die Alkoxykette 5 bis 50 Alkoxyl-Struktureinheiten enthält.

12. Arylierter, alkoxylierter Polyethylenimin-Farbstoff nach Anspruch 11, wobei die Alkoxykette 10 bis 20 Struktureinheiten enthält.

13. Arylierter, alkoxylierter Polyethylenimin-Farbstoff nach einem der vorstehenden Ansprüche, wobei nur ein oder zwei Stickstoffatome des Polyethylenimins alkoxyliert sind.

14. Arylierter, alkoxylierter Polyethylenimin-Farbstoff nach einem der vorstehenden Ansprüche, wobei nur ein einziger Reaktivfarbstoff kovalent an das Polyethylenimin gebunden ist.

15. Wäschebehandlungszusammensetzung, umfassend:
(i) 2 bis 70 Gew.-% eines Tensids; und
(ii) 0,01 bis 20,0 Gew.-% des arylierten, alkoxylierten Polyethylenimin-Farbstoffes nach einem der Ansprüche 1 bis 14.

16. Wäschebehandlungszusammensetzung nach Anspruch 15, umfassend:
(iii) einen nicht-arylierten, alkoxylierten Polyethylenimin-Farbstoff, wobei das Molverhältnis von nicht-aryliertem, alkoxyliertem Polyethylenimin-Farbstoff zu aryliertem, alkoxyliertem Polyethylenimin-Farbstoff im Bereich von 10:1 bis 1:100 liegt.

17. Für den Haushaltsgebrauch vorgesehenes Textilbehandlungsverfahren, umfassend die folgenden Stufen:
(i) das Behandeln einer Textilie mit einer wässrigen Lösung des arylierten, alkoxylierten Polyethylenimin-Farbstoffes nach einem der Ansprüche 1 bis 14, wobei die wässrige Lösung 100 ppb bis 5000 ppm des arylierten, alkoxylierten Polyethylenimin-Farbstoffes und 0,0g/Liter bis 3 g/Liter eines Tensids umfasst; und
(ii) gegebenenfalls Spülen und Trocknen der Textilie.

18. Für den Haushaltsgebrauch vorgesehenes Verfahren nach Anspruch 17, umfassend: (iii) einen nicht-arylierten, alkoxylierten Polyethylenimin-Farbstoff, wobei das Molverhältnis von nicht-aryliertem, alkoxyliertem Polyethylenimin-Farbstoff zu aryliertem, alkoxyliertem Polyethylenimin-Farbstoff im Bereich von 10:1 bis 1:100 liegt.

19. Für den Haushaltsgebrauch vorgesehenes Textilbehandlungsverfahren nach Anspruch 17 oder 18, wobei die wässrige Lösung 0,2 bis 3 g/Liter eines Tensids umfasst.

20. Für den Haushaltsgebrauch vorgesehenes Textilbehandlungsverfahren nach Anspruch 18 oder 19, wobei die wässrige Lösung ein fluoreszierendes Agens im Bereich von 0,0001 g/Liter bis 0,1 g/Liter umfasst.

## Revendications

1. Colorant de polyéthylèneimine alcoxylé arylé, dans lequel le colorant de polyéthylèneimine alcoxylé arylé est une polyéthylèneimine présentant, lié de manière covalente aux groupes azote de la polyéthylèneimine :
(i) un colorant réactif bleu ou violet ;
(ii) un oxyde d'alkylène ; et,
(iii) une chaîne alkylène, présentant lié de manière covalente à celle-ci, un groupe phényle ou naphtyle.

2. Colorant de polyéthylèneimine alcoxylé arylé selon la revendication 1, dans lequel la polyéthylèneimine est une présentant de 6 à 100 atomes d'azote.

3. Colorant de polyéthylèneimine alcoxylé arylé selon la revendication 2, dans lequel la polyéthylèneimine est une présentant de préférence de 12 à 40 atomes d'azote.

4. Colorant de polyéthylèneimine alcoxylé arylé selon l'une quelconque des revendications 1 à 3, dans lequel la chaîne alkylène présentant un groupe phényle suspendu est formée par l'addition d'une amine de polyéthylèneimine à de l'oxyde de styrène ou de l'oxyde d'alpha-méthylstyrène.

5. Colorant de polyéthylèneimine alcoxylé arylé selon l'une quelconque des revendications 1 à 4, dans lequel le chromophore de colorant bleu et violet du colorant réactif est choisi parmi : l'anthraquinone ; le bis-azo ; la triphénodioxazine ; et, la phtalocyanine.

6. Colorant de polyéthylèneimine alcoxylé arylé selon la revendication 5, dans lequel le chromophore de colorant bleu et violet du colorant réactif est le bis-azo.

7. Colorant de polyéthylèneimine alcoxylé arylé selon l'une quelconque des revendications précédentes, dans lequel le colorant réactif présente un groupe réactif choisi dans le groupe comprenant : le dichlorotriazinyle ; la difluorochloropyrimidine ; le monofluorotrazinyle ; la dichloroquinoxaline ; la vinylsulfone ; la difluorotriazine ; le monochlorotriazinyle ; le bromoacrylamide ; et, la trichloropyrimidine.

8. Colorant de polyéthylèneimine alcoxylé arylé selon la revendication 6, dans lequel le colorant réactif bleu ou violet est choisi parmi :
noir réactif 5 ; bleu réactif 171 ; bleu réactif 154 ; bleu réactif 184 ; bleu réactif 207 ; bleu réactif 214 ; bleu réactif 203, bleu réactif 217 ; bleu réactif 225, Levafix Navy CA ; Procion Navy H-EXL ; bleu réactif 176 ; bleu réactif 109 ; bleu réactif 230 ; bleu réactif 225 ; bleu réactif 222 ; bleu
réactif 250 ; bleu réactif 281 ; et,

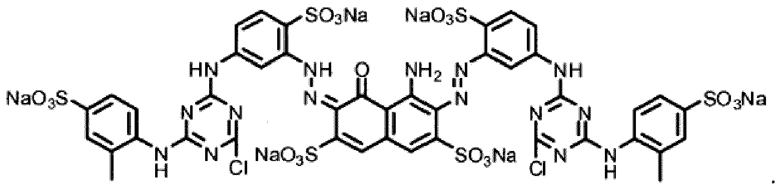

9. Colorant de polyéthylèneimine alcoxylé arylé selon l'une quelconque des revendications précédentes, dans lequel l'oxyde d'alkylène est un poly(oxyde d'alkylène).

10. Colorant de polyéthylèneimine alcoxylé arylé selon la revendication 9, dans lequel la chaîne alcoxy de l'oxyde d'éthylène est choisie parmi : des groupes éthoxy ; et, propoxy.

11. Colorant de polyéthylèneimine alcoxylé arylé selon la revendication 10, dans lequel la chaîne alcoxy contient de 5 à 50 unités répétitives alcoxy.

12. Colorant de polyéthylèneimine alcoxylé arylé selon la revendication 11, dans lequel la chaîne alcoxy contient de 10 à 20 unités répétitives.

13. Colorant de polyéthylèneimine alcoxylé arylé selon l'une quelconque des revendications précédentes, dans lequel seulement un ou deux des azotes de la polyéthylèneimine sont alcoxylés.

14. Colorant de polyéthylèneimine alcoxylé arylé selon l'une quelconque des revendications précédentes, dans lequel seulement un colorant réactif est lié de manière covalente à la polyéthylèneimine.

15. Composition de traitement de lavage comprenant :
(i) de 2 à 70 % en poids d'un tensioactif ; et,
(ii) de 0,01 à 20,0 % en poids du colorant de polyéthylèneimine alcoxylé arylé comme défini dans l'une quelconque des revendications 1 à 14.

16. Composition de traitement de lavage selon la revendication 15, comprenant : (iii) un colorant de polyéthylèneimine alcoxylé non-arylé, dans lequel le rapport molaire du colorant de polyéthylèneimine alcoxylé non-arylé au colorant de polyéthylèneimine alcoxylé arylé se trouve dans l'intervalle de 10:1 à 1:100.

17. Procédé domestique de traitement d'un textile, le procédé comprenant les étapes :
(i) de traitement d'un textile avec une solution aqueuse du colorant de polyéthylèneimine alcoxylé arylé selon l'une quelconque des revendications 1 à 14, la solution aqueuse comprenant de 100 ppb à 5 000 ppm, du colorant de polyéthylèneimine alcoxylé arylé ; et, de 0,0 g/L à 3 g/L d'un tensioactif ; et,
(ii) de rinçage et de séchage éventuels du textile.

18. Procédé domestique selon la revendication 17, comprenant :
(iii) un colorant de polyéthylèneimine alcoxylé non-arylé, dans lequel le rapport molaire du colorant de polyéthylèneimine alcoxylé non-arylé au colorant de polyéthylèneimine alcoxylé arylé se trouve dans l'intervalle de 10:1 à 1:100.

19. Procédé domestique de traitement d'un textile selon la revendication 17 ou 18, dans lequel la solution aqueuse comprend de 0,2 à 3 g/L d'un tensioactif.

20. Procédé domestique de traitement d'un textile selon la revendication 18 ou 19, dans lequel la solution aqueuse comprend un fluorescent dans l'intervalle de 0,0001 g/l à 0,1 g/l.
